# EUROPÄISCHE PATENTSCHRIFT

(11) **EP 2 217 834 B1**
(45) Veröffentlichungstag und Bekanntmachung des Hinweises auf die Patenterteilung: **30.05.2012**
(21) Anmeldenummer: 08855075.1
(22) Anmeldetag: 27.11.2008
(51) Int. Cl.: F16H 57/02

(54) **ANTRIEBSSYSTEM MIT MODULAR KOMBINIERBAREN BAUTEILEN**
DRIVE SYSTEM COMPRISING COMPONENTS THAT CAN BE COMBINED TO FORM MODULES
SYSTÈME D'ENTRAÎNEMENT COMPORTANT DES PIÈCES POUVANT ÊTRE AGENCÉES DE MANIÈRE MODULAIRE

(30) Priorität: 29.11.2007 DE 102007058809
(43) Veröffentlichungstag der Anmeldung: 18.08.2010
(73) Patentinhaber: Schüle, Robert, 71034 Böblingen (DE)
(72) Erfinder: Schüle, Robert, 71034 Böblingen (DE)
(74) Vertreter: Limbeck, Achim
(86) Internationale Anmeldenummer: PCT/DE2008/001962
(87) Internationale Veröffentlichungsnummer: WO 2009/068009

(56) Entgegenhaltungen:
- DE-A1- 10 309 083
- DE-A1-102005 048 129
- DE-U1-202005 011 632
- US-A- 5 329 657
- [Online] XP007909445 Gefunden im Internet: URL:http://www.auma-stellantriebe.de/uploa ds/media/sp_import2/prospekte/antriebe/all gemein/in_lms1_de.pdf> [gefunden am 2009-08-07]

## Beschreibung

Die vorliegende Erfindung betrifft ein neuartiges Antriebssystem mit Modular kombinierbaren Bauteilen, aus denen eine Vielzahl von Antrieben und Abtrieben mit unterschiedlichen Eigenschaften realisiert werden können, wobei jede Kombination der Bauteile jeweils ein Gehäuseunterteil und zumindest einen Motor, eine Untersetzung, bestehend aus einem Ritzel und einem Zahnrad, beinhaltet.

Derartige Antriebssysteme finden vorwiegend in der Automobilindustrie Anwendung, z.B. an elektrisch verstellbaren Sitzen, Klappen, Rollos, Fenstern oder Türen. Besonders geeignet sind die Antriebe, wenn diese anzutreibenden Lasten durch Verschlüsse gesichert werden müssen oder wenn es sich um Hebewerke handelt und insbesondere dann, wenn das Systemgewicht oder die Funktionskosten von besonderer Bedeutung sind.

Zum Antreiben von Klappen und Verschlüssen in Automobilen ist aus dem gattungsgemäßen Dokument DE 102005048129B4 ein durch ein Differential modular erweiterbarer Antrieb bekannt. Dieses Antriebsystem besitzt durch eine Lastmomentsperre in Form eines selbsthemmenden Gewindes im Tellerrad, jedoch ausschließlich für die translatorische Bewegung einer Spindel, nicht für deren Rotation. Die verwendete Wickelfeder hat den Zweck, einen derartigen Antrieb für Zentralverriegelungen verwenden zu können. Da das Gewinde im Tellerrad selbsthemmend ausgestaltet ist und die Wickelfeder nur eine begrenzte Anzahl an Windungen aufwickeln kann, sind mit diesem System keine für einen Zentralverriegelungsantrieb üblichen translatorischen Stellwege realisierbar. Außerdem muss bei einer Zentralverriegelung aus Sicherheitsgründen die Spindel reversierbar sein. Dann kann die Schließfeder einer Verriegelung den Entriegelungsantrieb auch dann noch reversieren, wenn dessen Wickelfeder fehlt, etwas klemmt oder gebrochen ist.

Ein Antrieb, der einen Verschluss im Fahrzeug öffnet, muss mechanisch selbstrückstellend sein, damit ein Fehler oder Ausfall der Ansteuerelektronik nicht zu einem halb geöffneten Verschluss führen kann. DE 102005048129B4 besitzt jedoch keine Lastmomentsperre für rotatorische Abtriebe, keine Rückstellfeder für einen der Abtriebe des Ausgleichsgetriebes, kein Gewindestück und sieht nur ein Gehäuseoberteil für alle Antriebe vor. Ohne Lastmomentsperre können mit diesem Antrieb deshalb nur ausbalancierte Klappmechanismen angetrieben werden. Der Antrieb eignet sich somit nicht für Hebewerke wie elektrische Fensterheber, Jalousien oder Heckklappenantriebe. Soll mit einem solchen Antrieb gleichzeitig eine Klappe und ein Verschluss betätigt werden, so stellt die fehlende Rückstellfeder ein Sicherheitsrisiko für das Schließen des Verschlusses dar.

Zwar ist in DE102005048129B4 ein Hohlrad beschrieben, welches über einen Bowdenzug einen Verschluss antreiben kann, es fehlt hingegen eine Rückstellfeder, welche das Hohlrad immer in die exakt gleiche Ausgangsstellung bringt. Ohne eigene Rückstellfeder im Antrieb kann das Hohlrad auch durch große Kräfte, bedingt durch die Reibung im Antrieb und im Bowdenzug, nur bis zu einem bestimmten Winkel auf die Mittenstellung zurückgedreht werden. Diese führt zu einem reduzierten Schließweg und kann bei bestimmten Schlössern auch ein vollständiges Schließen verhindern.

Ein weiterer Nachteil ist darin zu sehen, dass das Antriebsystem aus DE102005048129B4 lediglich einen rotatorischen Abtrieb besitzt, der zudem nur einfach untersetzt ist. Dieses Antriebsystem besitzt keine Möglichkeit einer Endlagendämpfung. Wenn die Klappe gegen einen harten Anschlag fährt, treten deshalb Lastmamentstöße auf. Die Bauteile des Antriebes müssen entsprechend größer dimensioniert sein und sind damit auch teurer als eigentlich erforderlich.

Das dargestellte Planetengetriebe mit nur einem Planeten ist nur in einer Einebenenwuchtung auswuchtbar. Damit ist ein Antrieb mit diesem Getriebe für hohe Drehzahlen ungeeignet.

Darüber hinaus ist aus der deutschen Offenlegungsschrift DE4318481A1 eine Antriebsvorrichtung mit einem elektrischen Antriebsmotor bekannt, wobei eine Ankerwelle des Motors über ein Ausgleichgetriebe wahlweise mit einer ersten oder mit einer zweiten Abtriebswelle verbunden ist und wobei jede dieser Abtriebswellen mit einem anderen Einrichtungsteil eines Kraftfahrzeuges zusammenwirkt. Das Ausgleichsgetriebe ist ober nicht modular kombinierbar mit einer Lastmomentsperre oder einer Rückstellfeder oder einem Gewindestück und einem passenden Gehäuse, bei dem ein Gehäuseunterteil immer gleich bleibt und nur das Gehäuseoberteil angepasst wird.

Es ist ferner bekannt, dass mit einer Wickelfeder eine einfache und kostengünstige Lastmomentsperre gebaut werden kann. Diese Lostmomentsperren haben aber den Nachteil, dass der Zusammenhang zwischen Bremsmoment Mb und Reibwert µ zwischen Bremstrommel und Wickelfeder exponentiell ist. Bei der Seilreibung gilt für die Kräfte S1 und S2 und bei einem Umschlingungswinkel a S1 / S2 = e^(-µa). Dies führt zu extrem starken Schwankungen der Bremscharakteristik in einer Serienfertigung. Auch bei sehr enger Tolerierung aller Einflussgrößen wird der Reibwert µ durch Verschleiß und durch Alterung des Schmierstoffes nicht genau vorhersagbaren Schwankungen unterliegen. Dementsprechend wird die Bremswirkung einer Lastmomentsperre mit Wickelfeder noch viel stärker schwanken als der Reibwert µ. Was bis zum Durchrutschen einer abzubremsenden Last führen kann und somit ein Sicherheitsrisiko darstellt. Da Antriebe mit Lastmomentsperren im Automobil in sehr hohen Stückzahlen benötigt werden, sind Wickelfedern hier nicht geeignet.

Außerdem ist es bekannt, Lastmomente durch selbsthemmende Getriebe zu sperren. Selbsthemmende Getriebe erreichen aber nur Wirkungsgrade kleiner gleich 50%. Das macht die Antriebe schwerer und teurer als notwendig, denn nicht selbsthemmende Getriebe erreichen deutlich höhere Wirkungsgrade von circa 75%.

Aus der DE 20 2005 011632 ist ein Antriebssystem der eingangs genannten Art bekannt, bei dem über ein Schneckengetriebe eine Spindel angetrieben wird. Schneckengetriebe haben allerdings sehr schlechte Wirkungsgrade von meist weniger als 50%. Damit sind sie für den Leichtbau im Automobil eigentlich ungeeignet. Das Schneckenrad wird durch eine als Lastmomentsperre wirkende Schlingfeder gegen ein Rückdrehen des Antriebes gesichert. Der Reibwert zwischen Schlingfeder und Gehäuse ist von vielen Faktoren abhängig. Einflussfaktoren sind zum Beispiel Fettung, Alter, Abrieb, Temperatur. Temperaturgang, Bauteiltoleranzen etc. Der Reibwert zwischen Schlingfeder und Gehäuse ist somit eine stark schwankende Größe. Dieser Reibwert wirkt sich auf das Bremsmoment zusätzlich noch exponentiell aus. Eine solche Lastmomentsperre hat deshalb besonders stark schwankende und nichlineare Bremseigenschaften. Breite Streuungen in der Herstellung und starke Schwankungen im Betrieb sind die Folge. Schlingfedern können bei ungünstiger Gestaltung der Federenden oder durch betriebsbedingte Veränderungen plötzlich beginnen nur noch zwei Zustände zu haben. Ganz geöffnet oder ganz geschlossen. Dann sind sie gänzlich ungeeignet für Hebewerke, da die Last in der Abwärtsfahrt anfängt zu rattern.

Aus der DE 103 09 083 ist ferner ein Antriebsystem bekannt, bei dem einer Getriebeeinheit eine Lastmomentsperre nachgeschaltet wird, wobei die gezeigte Lastmomentsperre nur zwei Zustände kennt. Ganz auf oder ganz zu. Sie schaltet quasi digital auf und zu. Solche Lastmomentsperren sind etwa in Akkuschraubern sehr verbreitet, um deren Abtriebsspindeln im Stillstand zu arretieren. Diese Ausgestaltung ist jedoch für Hebewerke ungeeignet, da die Last in der Abwärtsfahrt ebenfalls anfangen würde zu rattern.

Kraftfahrzeuge weisen heutzutage eine Vielzahl von motorischen Antrieben auf, an die vielfältige und ganz unterschiedliche Anforderungen gestellt werden. Da es sich aber bei den Elektromotoren um Massenbauteile handelt, bei denen Anpassungen nur in begrenztem Umfang möglich sind, ist es Aufgabe dieser Erfindung, mit nur wenigen Bauteilen durch unterschiedliche Kombination eine große Anzahl von Antrieben und Abtrieben zur Verfügung zu stellen. Antriebe, welche in sehr großen Stückzahlen benötigt werden, insbesondere Antriebskombinationen für Zentralverriegelungen, sollten dabei vorzugsweise nur wenige Bauteile enthalten.

Darüber hinaus sollte der Wirkungsgrad der überwiegenden Mehrheit der Antriebe und Abtriebe nicht kleiner als 50% werden, sondern deutlich größer bleiben. Die Funktion der dafür benötigten Lastmomentsperre soll dabei besonders robust sein gegen Reibwertschwankungen, Lastmomentschwankungen und Bauteiltoleranzen.

Typische Funktionsanforderungen an Antriebe, die durch das erfundene System von Bauteilen zur Verfügung gestellt werden sind:
- translatorische Abtriebsbewegungen
- rotatorische Abtriebsbewegungen
- Ansteuerung von Bowdenzügen
- reversierbare Abtriebe
- nicht reversierbare Abtriebe
- endlagengedämpfte Abtriebe
- nicht endlagengedämpfte Abtriebe
- einstufig untersetzte Abtriebe
- zweistufig untersetzte Abtriebe
- Leistungsverzweigte Getriebe
- nicht leistungsverzweigte Getriebe
- motorischer Antrieb mit federgetriebene Rückstellung
- federgetriebener Antrieb mit motorischer Rückstellung
- rein motorische Vor- und Rückstellung

Diese Eigenschaften können in vielfältigen Kombinationen von einem Antrieb gefordert werden. Translatorische Bewegungen sollen über stabile Metallspindeln darstellbar sein, da hier große Kräfte wirken können. Der Platzbedarf des Gesamtantriebes sollte dabei möglichst klein bleiben, auch wenn etwa nur ein einfacher Motor mit Winkeltrieb benötigt wird. Dadurch soll sich aber die Anzahl der benötigten Gehäuseteile nicht wesentlich vergrößern.

Erfindungsgemäß wird die voranstehende Aufgabe mit den Merkmalen des Patentanspruchs 1 gelöst. Vorteilhafte Ausgestaltungen des erfindungsgemäßen Antriebssystems sind in Unteransprüchen angegeben.

Weitere Ziele, Merkmale, Vorteile und Anwendungsmöglichkeiten des Antriebssystems ergeben sich aus der nachfolgenden Beschreibung eines Ausführungsbeispiele anhand der Zeichnungen.

In den Zeichnungen zeigen

Fig.1 eine Explosionsdarstellung des Antriebssystems mit maximaler Anzahl an Bauteilen,

Fig.1a eine Explosionsdarstellung des Antriebssystems für ein Seitenfensterrollo,

Fig.1b eine Explosionsdarstellung des Antriebssystems für eine Sitzverklappung,

Fig.2 einen Schnitt durch ein Antriebssystem wie in Fig.1.

Fig.3 und Fig.3a einen Schnitt durch die Lastmomentsperre und die geraden Bereiche der Biegefeder 8;

Fig.3b die Lastmomentsperre wie in Fig.3 in einer perspektivischen Ansicht.

Fig.4 einen weiteren Schnitt durch das Antriebssystem,

Fig.5 die Funktionsweise des Bowdenzuges 17 und des Verschlusses 25.

Fig.6 einen Schnitt durch das Gehäuseoberteil 2", welches bei einfach untersetzten Antrieben mit und ohne Lastmomentsperre benötigt wird.

Fig.7 einen Schnitt durch das Gehäuseoberteil 2"', welches bei einfach untersetzten Antrieben ohne Lastmomentsperre benötigt wird.

Fig.8 die in das Kegelrad (Zahnrad) 5 montierte Wickelfeder 6 in einer von zwei möglichen Montagestellungen.

Fig.9 die Steuerfeder 7 als Biegebalken zwischen Kegelrad 5 und Abtrieb.

Fig.10a, 30b die mit dem erfindungsgemäßen Antriebssystem modulierbaren Antriebskombinationen A bis K2 tabellarisch.

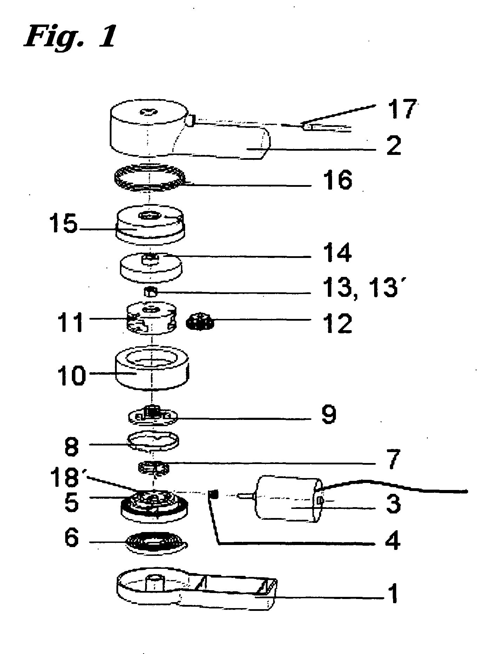

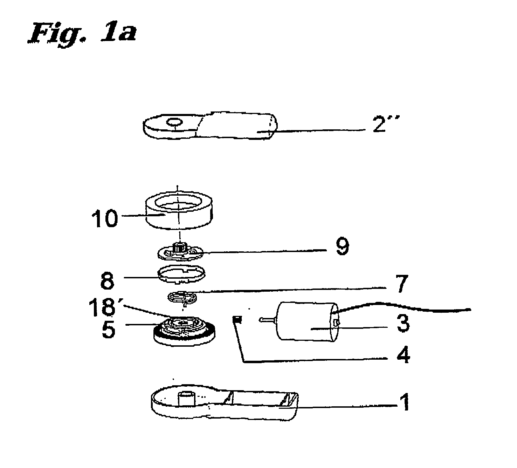

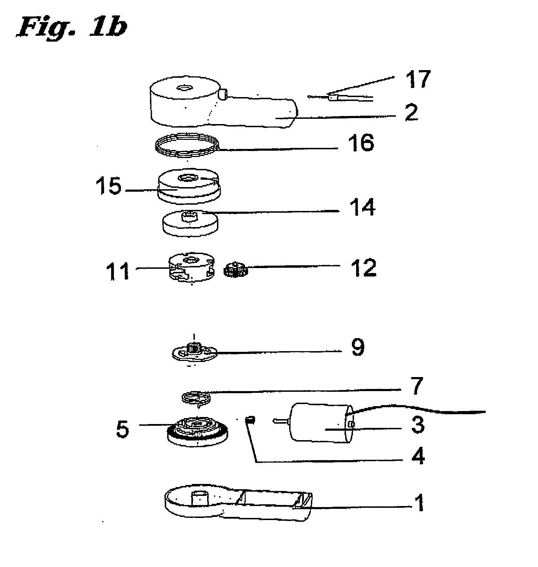

In Fig.1 sind zunächst sämtliche Bauteile einer bevorzugten Ausführungsform des Antriebssystems anschaulich in einer Explosionsdarstellung dargestellt. Es sind das Gehäuseunterteil 1, das Gehäuseoberteil 2, der Motor 3, das Ritzel 4, das Kegelrad 5 mit reversierbarem Gewinde 18' mit nicht selbsthemmender Steigung, eine Wickelfeder 6, eine Steuerfeder 7, eine Bremsfeder 8, ein Abtrieb 9, ein Bremsring 10, ein Steg 11, Planeten 12, Gewindestücke 13 und 13, ein inneres Hohlrad 14, ein äußeres Hohlrad 15, eine Rückstellfeder 16 und ein Bowdenzug 17 in einer aufbauenden Montage dargestellt.

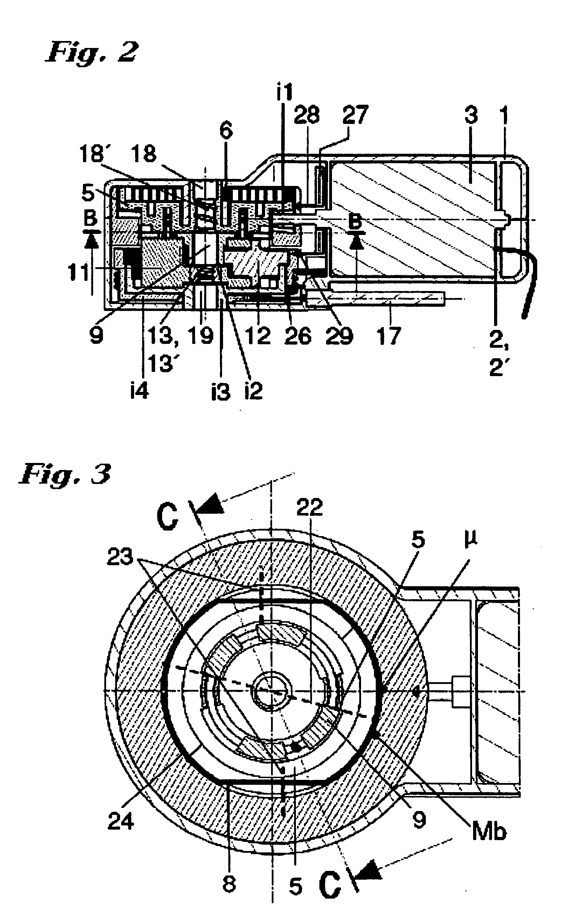

In Fig.2 ist der in Fig.1 gezeigte Antrieb im Schnitt dargestellt. Die Gehöuseoberteile 2 und 2 unterscheiden sich lediglich durch die Arretierrippe 26, die im Schnitt angedeutet ist. Ferner sind die Untersetzungen i1,i2,i3,i4 dargestellt. Der aus Fig.2 ersichtliche einfach untersetzte Abtrieb 18 entsteht durch einen Formschluss im Zahnrad 5. Der zweifach untersetzte Abtrieb 19 entsteht durch einen Formschluss im inneren Hohlrad 14.

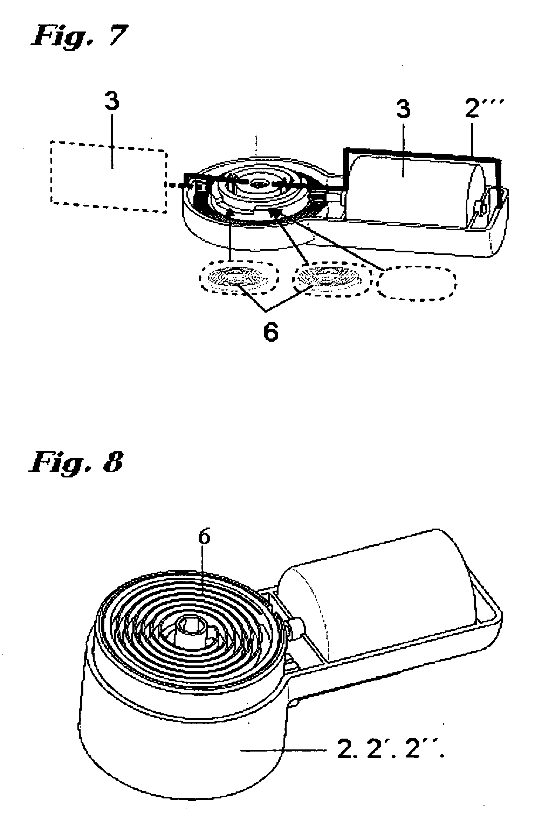

Der (einfach untersetzte) Grundantrieb des erfindungsgemäßen Antriebssystems besteht aus einem Gehäuseunterteil 1 und einem Gehäuseoberteil 2'" (siehe hierzu Fig.7), in das mindestens ein Motor 3 mit je einem Ritzel 4 und einem Kegelrad 5 montiert ist. Das Kegelrad 5 besitzt ein Gewinde 18' mit nicht selbsthemmender Steigung und einem Formschluss für den Abtrieb 18, so dass mit dem Antriebssystem sowohl eine reversierbare Spindel als auch ein rotatorischer Abtrieb angetrieben werden kann.

In das Kegelrad 5 ist vorteilhafterweise eine Wickelfeder 6 montiert, dessen Windungen entweder links oder rechts herum gewickelt sind, wodurch 3 unterschiedliche Antriebe A,B,C entstehen. Jeder dieser Antriebe hat zwei Abtriebsmöglichkeiten B,C, einen einfach untersetzten rotatorischen Abtrieb 18 und einen translatorischen, zum Antrieb einer reversierenden Spindel 20. Ist dagegen keine Wickelfeder 6 montiert, erhält man einen einfachen Getriebemotor A mit einstufiger Untersetzung. Wird die Wickelfeder 6 links herum montiert, so ergibt sich ein Entriegelungsantrieb B, der in der einen Richtung motorisch antreibt und in der anderen Richtung federgetrieben zurückfährt, sobald der Motor 3 abgeschaltet wird. Wird die Wickelfeder 6 rechts herum montiert, treibt der Antrieb C in der einen Richtung federgetrieben an und fährt in der anderen Richtung motorisch zurück.

Kombiniert man einen dieser drei Antriebe A,B,C mit dem Abtrieb 9 und ersetzt das Gehäuseoberteil 2"' durch das Gehäuseoberteil 2", so entstehen drei weitere Antriebe D,E,F, welche einen zweiten rotatorischen Abtrieb auf der anderen Gehäuseseite besitzen, ober noch keine Lostmomentsperre beinhalten. Die weiteren Antriebe D,E,F haben jeweils drei Abtriebsmöglichkeiten. Zwei rotatorische und einen reversierbaren translatorischen 18. Die Gehäuseoberteile 2,2',2", 2"' können so variiert werden, dass immer ein kompakter Antrieb entsteht. Sie unterscheiden sich trotzdem oft nur in wenigen Details, so dass sie teilweise über Werkzeugwechseleinsätze hergestellt werden können.

Die erfindungsgemäße Lastmomentsperre, die im folgenden Absatz näher erörtert wird, entsteht durch Montage der Bauteile Steuerfeder 7. Bremsfeder, 8, Abtrieb 9 und Bremsring 10 in einem der Antriebe D,E,F mit dem Gehäuseoberteil 2", wodurch nochmals drei weitere Antriebe entstehen, welche eine einstufige Untersetzung mit Lastmomentsperre besitzen. Auch diese Antriebe G,H,I haben jeweils drei Abtriebsmöglichkeiten.

Zur Realisierung der Lastmomentsperre wird beim Heben einer Last das Kegelrad 5 die Bremsfeder 8 relativ zum Abtrieb 9 so gedreht, dass sich die Bremsfeder 8 zusammenziehen kann. Gleichzeitig wird bei diesem Vorgang die Steuerfeder 7 gespannt. Dies funktioniert in beiden Richtungen symmetrisch. Dadurch entsteht ein Spalt zwischen Biegefeder 8 und Bremsring 10. Die Bremse (bestehend aus Bremsfeder 8 und Bremsring 10) ist geöffnet und läuft frei. Wird der Motor 3 abgeschaltet, so dreht sich das Drehmoment in der Bremse um. Die Steuerfeder 7 verdreht d nn das Kegelrad 5 relativ zum Abtrieb 9. Dadurch wird auch die Bremsfeder 8 vergelrad 5 relativ zum Abtrieb 9. Dadurch wird auch die Bremsfeder. 8 verdreht und aufgeweitet, bis sie am Bremsring 10 anliegt. Der Bremsring 10 sollte so massiv sein, dass er die beim Bremsen entstehende Wärme gut aufnehmen und ableiten kann. Durch das kleine Bremsmoment wird die Bremsfeder 8 immer stärker in den Bremsspalt 24 gezogen, bis das not-wendige Bremsmoment erreicht ist. Dabei erzeugt auch der Schmierfilm zwischen Bremsfeder 8 und Bremsring 10 ein kleines Moment, welches ausreicht, um die Bremse zu schließen, aber nicht so dynarnisch wie mit der Steuerfeder 7. Die Last rutscht erst etwas zurück. Da der Abtrieb zum Kegelrad 5 drehfest verbunden sein muss, wenn keine Lastmomentsperre benötigt wird, kann der Abtrieb 9 zum Kegelrad 5 in zwei Positionen gesteckt werden. Einmal drehfest und einmal um den Schaltwinkel in beide Richtungen drehbar.

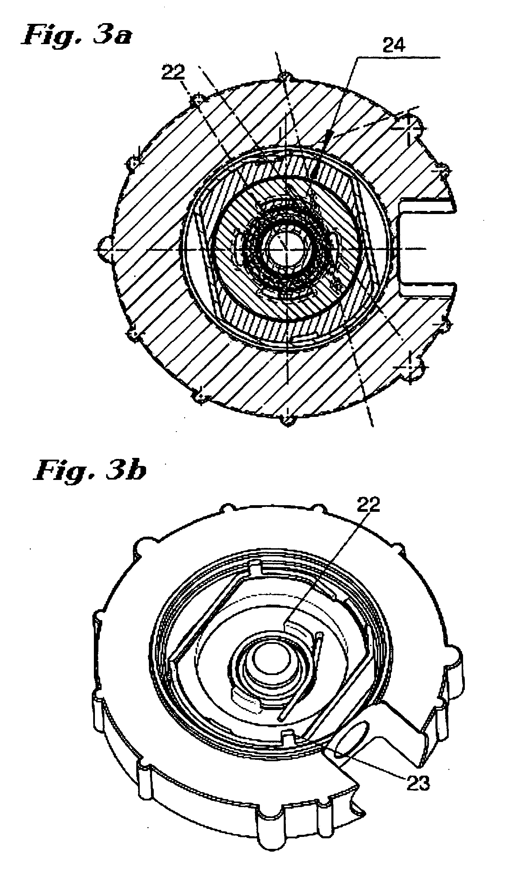

Wie aus Fig.3 und den Fign. 3a,3b ersichtlich, wirkt der Anschlag 23 zwischen Kegelrad 5 und Bremsfeder 8. Der Anschlag 22 wirkt zwischen Kegelrad 5 und Abtrieb 9. In dieser Stellung treibt der Motor 3 die Last direkt über den Anschlag 22 an. Das Kegelrad 5 nimmt die Bremsfeder 8 über den Anschlag 23 in genau der Stellung so mit, dass zwischen Bremsfeder 8 und Bremsring 10 der Bremsspalt 24 entsteht. In Fig.3 sind die Stellen gekennzeichnet, an denen einerseits der Reibwert µ auftritt und on denen andererseits das Bremsmoment Mb entsteht.

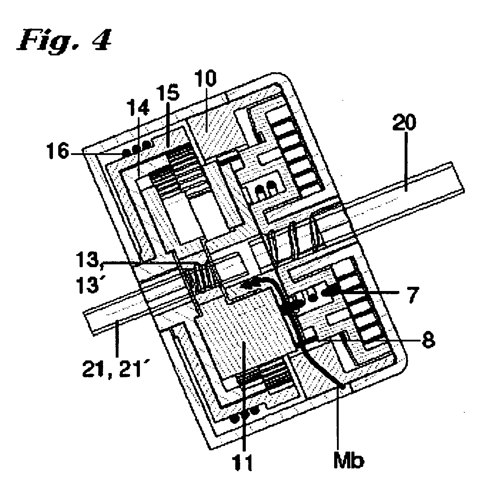

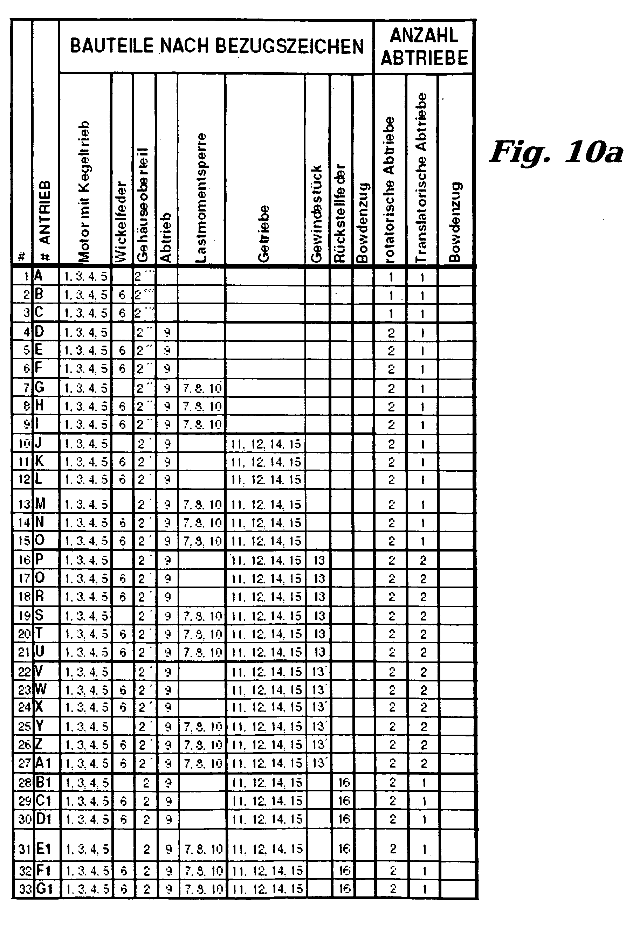

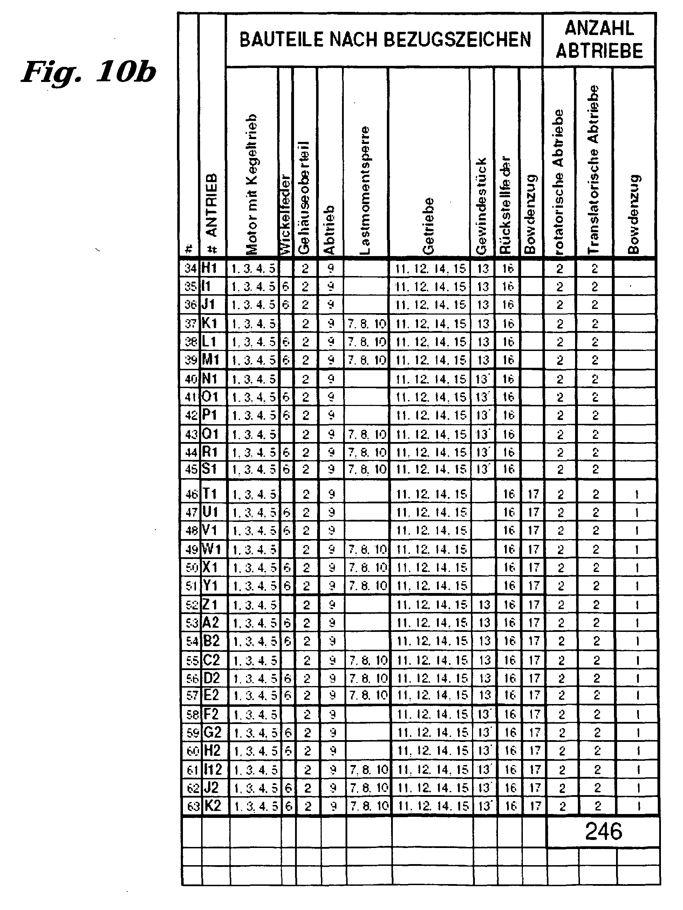

In Fig.4 ist dargestellt, wie die Steuerfeder 7 zwischen Kegelrad 5 und Abtrieb 9 in beiden Richtungen rückstellend auf die Mittenstellung wirkt. Die Steuerfeder 7 kann je nach Größe der Bauteile entweder als separates Bauteil ausgeführt werden oder aber, wie in Fig. 10 gezeigt, an das Kegelrad 5 oder den Abtrieb 9 in Form eines Biegebalkens angeformt sein. Die Abtriebspindel 20 wird vom Kegelrad 5 angetrieben. Die Spindeln 21 und 21' werden von den Gewindestücken 13 und 13' angetrieben. Ferner ist der Verlauf des Bremsmomentes Mb durch das Getriebe veranschaulicht.

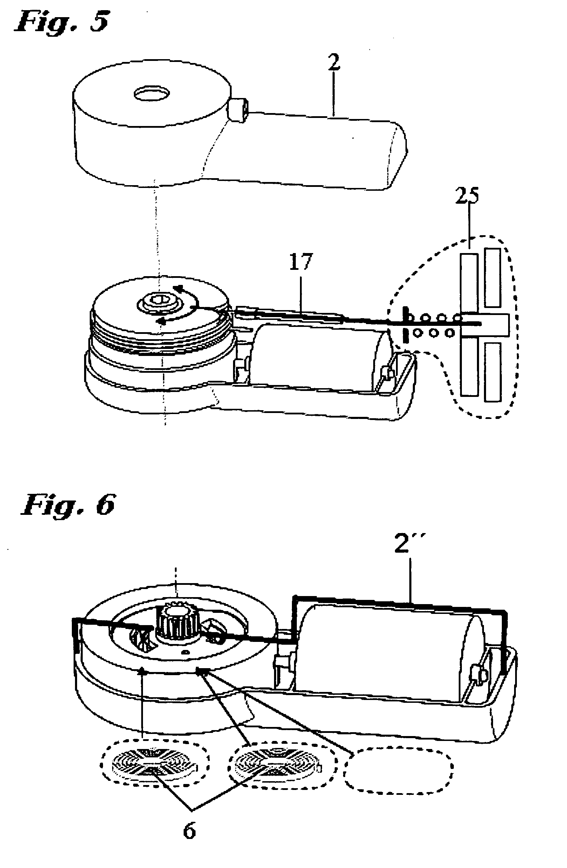

Fig.5 erläutert anschaulich, wie mittels des Bowdenzuges 17 ein Verschluss 25 betätigt werden kann. Dabei spielt die Drehrichtung keine Rolle. Der Bowdenzug 17 wird immer zuerst gezogen. Sodann geht der Verschluss 25 auf Anschlag und das Motormoment wird zum Beispiel an das innere Hohlrad 14 weitergeleitet, welches damit etwa eine Klappe antreiben kann. Der Bowdenzug 17 kann einfach axial montiert werden. Die Untersetzungen i1,i2,i3 und i4 werden dabei so gewählt, dass ein breiter Bereich an Drehmomenten und Kräfte abgedeckt wird.

Fig.6 zeigt einen Schnitt durch das Gehäuseoberteil 2" , welches bei einfach untersetzten Antrieben mit und ohne Lastmomentsperre benötigt wird.

Fig.7 zeigt einen Schnitt durch das Gehäuseoberteil 2"', welches bei einfach untersetzten Antrieben ohne Lastmomentsperre und ohne Abtrieb 9 benötigt wird. Hieraus ist ersichtlich, dass es möglich ist, anstelle eines Motors 3 auch mehrere Motoren 3 zu verwenden.

Fig.8 zeigt die montierte Wickelfeder 6 im Kegelrad 5 in einer der beiden möglichen Montagestellungen.

Sowohl auf die Antriebe D,E,F als auch auf die Antriebe G,H,I kann vorzugsweise ein Getriebe, bestehend aus einem äußeren Hohlrad 15, einem inneren Hohlrad 14, einem Steg 11 und mehreren Planeten 12 (ebenfalls in den Fign.1, 2 und 4 dargestellt) aufgesetzt werden. Damit erhalten die vorgenannten Antriebe einen zweifach untersetzten rotatorischen Abtrieb 19.

Dieses Getriebe kann durch Montage eines Gewindestücks mit reversierbarer Gewindesteigung 13 oder eines Gewindestücks mit nicht reversierbarer Steigung (blockierend) 13' zu zwei weiteren Varianten ergänzt werden. Dadurch lässt sich entweder eine reversierende Spindei 21 oder eine nicht reversierende Spindel 21' über eine zweifache Untersetzung antreiben. Wird dagegen keines der Gewindestücke 13,13' montiert, entstehen die Antriebskombinationen J,K,LM,N,O mit jeweils drei Abtriebsmöglichkeiten.

Durch Montage des Gewindestücks 13 mit reversierbarer Steigung entstehen die Kombinationen P,Q,R,S,T,U mit ebenfalls je vier Abtriebsmöglichkeiten.

Durch Montage des blockierenden Gewindestücks 13' entstehen die Antriebskombinationen V,W,X,Y,Z,A 1 mit je vier Abtriebsmöglichkeiten.

Die Antriebe J bis A1 können mit dem Gehäuse 2' vervollständigt werden zu Antrieben ohne leistungsverzweigtes Getriebe.

Das Gehäuseoberteil 2' enthält eine Arretierrippe 26, welche das äußere Hohlrad 15 sperrt. Damit entstehen Antriebe mit reinen Untersetzungsgetrieben, ohne Endlagendämpfung.

In einer anderen Ausführungsform werden die Antriebe J bis A1 mit einer Rückstellfeder 16 und dem Gehäuse 2 kombiniert. Damit entstehen Antriebe mit reinen Untersetzungsgetrieben, aber mit Endlagendämpfung, wodurch sich weitere 18 Kombinationen B1 bis S1 ergeben.

In einer weiteren Ausführungsform werden die Antriebe J bis A1 mit einer Rückstellfeder 16 und dem Gehäuse 2 und dem Bowdenzug 17 kombiniert. Damit entstehen Antriebe mit leistungsverzweigten Getrieben. Es ergeben sich weitere 18 Antriebskombinationen T1 bis K2 mit je fünf Abtrieben.

Insgesamt ergeben sich demnach insgesamt 63 - in der Tabelle in Fig.10a, 10b aufgeführte - mechanische Antriebskombinationen bei einer maximalen Anzahl von 19 Bauteilen in einem Antrieb. Insgesamt benötigt man lediglich 22 verschiedene Bauteile, um alle möglichen Antriebskombinationen darzustellen.

Jeder der Abtriebe 17,18,18',19,20,21,21' hat unterschiedliche Eigenschaften bezüglich Bewegungsform, Untersetzung, Drehmoment. Kraft und Reversierbarkeit.

In den Antrieben A bis K2 kann eine Elektronik 27 vorgesehen sein, die (jeweils) Sensoren 28,29 sowohl für das Zahnrad 28 als auch für das äußere Hohlrad 29 trägt. Die Elektronik 27 kann nicht nur die Bewegung des Motors 3 erfassen, sondern auch die Position des äußeren Hohlrades 15 und damit indirekt den Zustand eines Verschlusses ermitteln.

Die Anschläge 22 und 23 liegen so, dass beim Antreiben der Last in beiden Drehrichtungen zwischen Bremsfeder 8 und Bremsring 10 ein Bremsspalt 24 besteht. Wenn in einem der Antriebe A bis K2 eine Wickelfeder 6 montiert wurde kann dafür die Steuerfeder 7 entfallen ohne dass die Funktion der Lastmomentsperre beeinträchtigt wird.

Die Vorteile des erfindungsgemäßen Antriebssystems und der einzelnen Kombinationsmöglichkeiten seiner Bauteile sind vielseitig. Es war für den Fachmann überaus erstaunlich, dass bei sämtlichen oben beschriebenen Antrieben alle genannten Nachteile nicht mehr auftraten.

So können Antriebe mit einfacher, zweifacher und dreifacher Untersetzung gebaut werden, wodurch ein breiter Anwendungsbereich abgedeckt wird. Aufgrund des reversierbaren Gewindes 18' im Kegelrad 5 können einfache Entriegelungsantriebe ohne Lastmomentsperre und ohne Differenzial zum Öffnen von Schlössern gebaut werden. Fehler im Antrieb oder in der Ansteuerungselektronik können sich nicht mehr negativ auf die Schließfunktion des Verschlusses auswirken, da der Antrieb mechanisch selbstrückstellend ist und auch vom Verschluss reversiert werden kann.

Die Entriegelungsantriebe haben zwei Bauteile weniger als die zur Zeit gebräuchlichen Antriebe, was Kosten spart und die Funktionssicherheit erhöht. Die Antriebe können wahlweise Lostmomentsperren enthalten ohne dass dies zu Verlusten im Gesamtwirkungsgrad führt. Dieser Vorteil schlägt sich entweder im Gewicht oder in den Kosten nieder. Beim Antreiben einer Last entsteht zwischen Bremsfeder 8 und Bremsring 10 ein kleiner Spalt, der Schleifgeräusche ausschließt. Die Steuerfeder 7 und der Schmierstoff sorgen beim Stoppen des Motors 3 in der Abwärtsfahrt für ein schnelles Einleiten der Bremsung, indem sie die Bremsfeder 8 etwas verdrehen und an den Bremsring 10 anpressen. Dabei wirkt die Steuerfeder 7 unterstützend zu dem durch den Schmierstoff verursachten Verstellmoment auf die Bremsfeder 8 und kann je nach Viskosität des Schmierstoffes schwach ausgelegt werden.

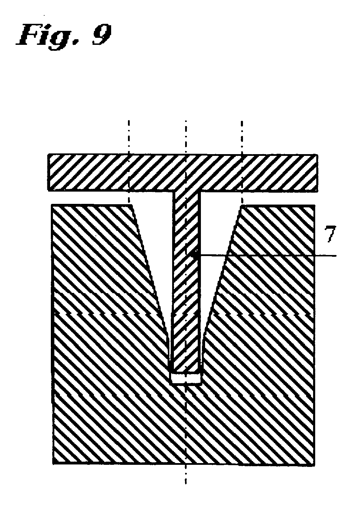

Die Steuerfeder 7 kann sogar ganz entfallen, wenn kein schnelles Ansprechverhalten der Sperre beim Stoppen einer Last in der Abwärtsfahrt sehr gefordert wird und bei geeignetem Schmierstoff und bei ausreichend kleinem Bremsspalt 24. Deshalb kann die Steuerfeder 7 - wie in Fig.9 dargestellt - auch als Biegebalken ausgeführt sein, welcher entweder an das Kegelrad 5 oder den Abtrieb 9 angeformt ist. Die Bremsfeder 8 der Lastmomentsperre wird beim Abbremsen von der Last so weit in den Bremsspalt gezogen, bis das erforderliche Bremsmoment erreicht ist. Das führt zu einem breiten Lostbereich, in dem die Sperre funktioniert, ohne dass anders dimensionierte Bremsfedern benötigt werden. Deshalb haben auch Bauteiltoleranzen oder Bauteilverschleiß keine Auswirkungen auf die Funktion. Die Lastmomentsperre kann geschmiert werden und Änderungen des Reibwertes wirken sich nur linear und nicht exponentiell auf das Bremsmoment auf.

Darüber hinaus ist das Differenzial vollständig auswuchtbar und eignet sich somit auch für größere Drehzahlen und Drehmomente. Die Rückstellfeder 16 des Differentials kann je nach Gehöuseoberteil als Rückstellfeder 16 oder ais Endlagendömpfung wirken. Die Rückstellfeder 16 ermöglicht es, mit nur einem Motor 3 sowohl die Last als auch den Verschluss der Last anzutreiben, ohne dass ein Sicherheitsrisiko für die Schließfunktion des Verschlusses besteht. Hierzu waren vorher zwei Antriebe notwendig. Die Rückstellfeder 16 ermöglicht es auch, Verschlüsse zu öffnen, welche nur eine sehr schwache Schließfeder haben, die ohne Rückstellfeder 16 zu schwach wäre den Antrieb zu reversieren.

Das erfindungsgemäße Antriebssystem beschrönkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Gehäuseunterteil
- 2: Gehäuseoberteil bei Bowdenzug
- 2': Gehäuseoberteil bei keinem Bowdenzug
- 2": Gehäuseoberteil ohne Getriebe mit Lastmomentsperre
- 2'": Gehäuseoberteil ohne Getriebe ohne Lastmomentsperre
- 3: Motor
- 4: Ritzel
- 5: Kegelrad
- 6: Wickelfeder
- 7: Steuerfeder
- 8: Brensfeder
- 9: Abtrieb
- 10: Bremsring
- 11: Steg
- 12: Planeten
- 13: Gewindestück reversierend
- 13': Gewindestück blockierend
- 14: inneres Hohlrad
- 15: äußeres Hohlrad
- 16: Rücksteilfeder
- 17: Bowdenzug
- 18: Abtrieb einfach untersetzt
- 18: Nicht selbsthemmendes Gewinde
- 19: Abtrieb zweifach untersetzt
- 20: Spindel reversierend
- 21: Spindel reversierend
- 21': Spindel blockierend
- 22: Anschlag X
- 23: Anschlag Y
- 24: Bremsspalt
- 25: Verschluss
- 26: Arretierrippe
- 27: Elektronik
- 28: Sensor Zahnrad
- 29: Sensor äußeres Hohlrad
- i1: Untersetzung Kegeltrieb
- i2: Untersetzung Steg
- i3: Untersetzung inneres Hohlrad
- i4: Untersetzung äußeres Hohlrad

- µ: Reibwert
- Mb: Bremsmoment

## Patentansprüche

1. Antriebssystem aus modular kombinierbaren Bauteilen, aus denen eine Vielzahl von Antrieben und Abtrieben mit unterschiedlichen Eigenschaften bereitgestellt werden können, wobei jede Kombination der Bauteile jeweils ein Gehäuseunterteil (1), zumindest einen Motpr (3) und eine Untersetzung, bestehend aus Ritzel (4) und Kegelrad (5), beinhaltet, unterschiedliche Gehäuseoberteile (2, 2', 2", 2"') vorgesehen sein können, die an dem Antriebssystem zur Realisierung unterschiedlicher An- und Abtriebe anordbar sind, und wobei ferner zur Realisierung eines leistungsverzweigten Getriebes ein Steg (11), ein inneres Hohlrad (14), ein Stufenplanet (12) und ein äußeres Hohlrad (15) vorgesehen sind, **dadurch gekennzeichnet, dass**
a) zur Realisierung eines Grundantriebes das Kogelred (5) ein Gewinde (18') mit nicht selbsthemmender Steigung und einem Formschluss für einen rotatorischen Abtrieb (18) aufweist,
b) zur Realisierung einer Lastmomentsperre mit einem linearen Zusammenhang zwischen Bremsmoment (Mb) und Reibwert (µ) sind eine Steuerfeder (7), eine Bremsfeder (8), ein Abtrieb (9) und ein Bremsring (10) vorgesehen sind, wobei die Lastmomentsperre ein linear ansteigendes oder fallendes Bremsmoment (Mb) aufweist, bei dem der Zusammenhang zwischen Bremsmoment (Mb) und Reibwert (µ) linear und nicht exponentiell ist, so dass Schwankungen des Reibwertes (µ) sich nur linear und nicht exponentiell auf das Bremsmoment (Mb) auswirken,
c) wobei ein Bowdenzug (17) am äußeren Hohlrad (15) angeordnet ist, über den ein Verschluss (25) betätigt werden kann.

2. Antriebssystem nach Anspruch 1,
**dadurch gekennzeichnet,**
**dass** am äußeren Hohlrad (15) eine Rückstellfeder (16) angeordnet ist, die auf das äußere Hohlrad (15) wirkt,

3. Antriebssystem nach Anspruch 1,
**dadurch gekennzeichnet,**
**dass** die Steuerfeder (7) als Biegebalken an das Kegelrad (5) und/oder als Biegebalken an den Abtrieb (9) angeformt ist.

4. Antriebssystem nach Anspruch 1,
dadurch gekennzeichet,
dass in das Kegelrad (5) eine Wickelfeder (6) anordbar ist, dessen Windungen entweder links oder rechts herum gewickelt sind.

5. Antriebssystem nach einem oder mehreren der vorangegangenen Ansprüche,
**dadurch gekennzeichnet,**
**dass** eine reversierbare Spindel (20) vorgesehen ist, die durch das Kegelrad (5) angetrieben wird und bei der die Gewindesteigung so groß ist, dass keine Selbsthemmung auftritt.

6. Antriebssystem nach einem oder mehreren der vorangegangenen Ansprüche,
**dadurch gekennzeichnet,**
**dass** Anschläge (22,23) so angeordnet sind, dass beim Antreiben einer Last in beiden Drehrichtungen zwischen Bremsfeder (8) und Bremsring (10) ein Bremsspalt (24) entsteht.

7. Antriebssystem nach einem oder mehreren der vorangegangenen Ansprüche,
**dadurch gekennzeichnet,**
**dass** am Gehäuseoberteil (2') eine Arretierrippe (26) vorgesehen ist, welche das äußere Hohlrad (15) sperrt.

8. Antriebssystem nach einem oder mehreren der vorangegangenen Ansprüche 3 bis 7,
**dadurch gekennzeichnet,**
**dass** ein zweifach untersetzter Abtrieb (19) durch einen Formschluss im inneren Hohlrad (14) entsteht.

9. Antriebssystem nach einem oder mehreren der vorangegangenen Ansprüche 3 bis 8 und einem Gewindestück mit reversierbarer Steigung oder einem Gewindestück mit nicht reversierbarer Steigung.
**dadurch gekennzeichnet,**
**dass** das Antriebssystem mit dem Gewindestück mit reversierbarer Steigung (13) kombiniert wird, um eine Spindel (21) anzutreiben oder dass das Antriebssystem mit dem Gewindestück mit nicht reversierbarer Steigung (13') kombiniert wird, um eine Spindel (21') anzutreiben.

10. Antriebssystem nach Anspruch 8 und nach Anspruch 9 wenn abhängig von Anspruch 8,
**dadurch gekennzeichnet,**
**dass** die Untersetzungen (i1,i2,i3,i4) so ausgestaltet sind, dass ein maximal großer Drehmoment Drehzahlbereich mit den rotatorischen Abtrieben (18,19) abgedeckt wird.

11. Antriebssystem nach den Ansprüchen 9 bzw. 10 wenn abhängig von Anspruch 5 oder den Ansprüchen 9 bzw 10 wenn abhängig von den Ansprüchen 6 bis 8 abhängig von Anspruch 5 ,
**dadurch gekennzeichnet,**
**dass** die Untersetzungen (i1,i2,i3,i4) und die Steigungen der Ge-windestücke (13,13') sowie der Steigung des Gewindes im Kegelrad (5) so ausgestaltet sind, dass ein maximal großer Kraft Geschwindigkeitsbereich mit den translatorischen Abtrieben (20,21,21') abgedeckt wird.

12. Antriebssystem nach einem oder mehreren der vorangegangenen Ansprüche und eine Elektronic,
**dadurch gekennzeichnet,**
**dass** die Elektronik (27) einen Sensor (28) zum Erfassen der Kegelradbewegung und/oder einen Sensor (29) zum Erfassen des äußeren Hohlrades (15) enthält.

13. Antriebssystem nach Anspruch 12,
**dadurch gekennzeichnet,**
**dass** das äußere Hohlrad (15) und/oder das Kegelrad (5) angeformte und/oder magnetisch ausgestaltete Markierungen aufweist, welche von den Sensoren (28,29) erfasst werden können.

14. Antriebssystem nach einem oder mehreren der vorangegangenen Ansprüche,
**dadurch gekennzeichnet,**
**dass** der Bremsring (10) so ausgestaltet ist, dass er als Kühlkörper für elektronische Bauteile (27,28,29) benutzt wird.

## Claims

1. A drive system made of components that can be combined in a modular manner, from which a plurality of drives and outputs having different properties can be provided, each combination of the components comprising one lower housing (1) each, at least one motor (3), and a gear reduction consisting of a pinion (4) and bevel gear (5), different upper housing parts (2, 2', 2", 2'") which can be arranged on the drive system for implementing different drives and outputs, and a fixed link (11), an inner annulus gear (14), a stepped planet gear (12), and an outer annulus gear (15) being further provided for implementing a power-split gearbox, **characterized in that**
a) the bevel gear (5) comprises a thread (18') having a non-self-locking pitch and a form fit for a rotating output (18) for implementing a basic drive,
b) a control spring (7), a brake spring (8), an output (9), and a brake ring (10) are provided for implementing a load moment block having a linear relationship between the braking torque (Mb) and a coefficient of friction (µ), wherein the load torque block comprises a linearly rising or falling braking moment, wherein the relationship between the braking moment (Mb) and the coefficient of friction (µ) is linear and not exponential, so that variations in the coefficient of friction (µ) act linearly and not exponentially on the braking moment (Mb),
c)wherein a Bowden cable (17) is disposed on the outer annulus gear (15), by means of which a closure (25) can be actuated.

2. The drive system according to claim 1,
**characterized in that**
a return spring (16) is disposed on the outer annulus gear (15) and acts on the outer annulus gear (15).

3. The drive system according to claim 1,
**characterized in that**,
the control spring (7) is formed as a flexing beam on the bevel gear (5) and/or as a flexing beam on the output (9).

4. The drive system according to claim 1,
**characterized in that**
a coiled spring (6) can be disposed in the bevel gear (5), the windings thereof being wound in either the left or right direction.

5. The drive system according to one or more of the preceding claims,
**characterized in that**
a reversible spindle (20) is provided, which is driven by the bevel gear (5) and has a thread pitch great enough that no self-locking occurs.

6. The drive system according to one or more of the preceding claims,
**characterized in that**
stops (22, 23) are disposed such that when a load is driven in both rotary directions, a braking gap (24) arises between the brake spring (8) and the brake ring (10).

7. The drive system according to one or more of the preceding claims,
**characterized in that**
a stop rib (26) is provided on the upper housing part (2') and blocks the outer annulus gear (15).

8. The drive system according to one or more of the preceding claims 3 through 7,
**characterized in that**
an output (19) having two gear reductions arises due to a form fit in the inner annulus gear (14).

9. The drive system according to one or more of the preceding claims 3 through 8 and a threaded part having a reversible pitch or a threaded part having a non-reversible pitch,
**characterized in that**,
the drive system is combined with the threaded part having reversible pitch (13) in order to drive a spindle (21), or the drive system is combined with the threaded part having non-reversible pitch (13') in order to drive a spindle 21'.

10. The drive system according to claim 8 and claim 9 if dependent on claim 8,
**characterized in that**,
the gear reductions (i1,i2,i3,i4) are designed such that a maximum torque speed range is covered by the rotary outputs (18, 19).

11. The drive system according to claims 9 and 10 if dependent on claim 5, or claims 9 and 10 if dependent on claims 6 through 8 that are dependent on claim 5
**characterized in that**,
the gear reductions (i1,i2,i3,i4) and the pitches of the threaded parts (13, 13') and the pitch of the thread in the bevel gear (5) are designed such that a maximum force speed range is covered by the translatory outputs (20,21,21').

12. The drive system according to one or more of the preceding claims, and electronics,
**characterized in that**
the electronics (27) comprise a sensor (28) for detecting the motion of the bevel gear and/or a sensor (29) for detecting the outer annulus gear (15).

13. The drive system according to claim 12,
**characterized in that**,
the outer annulus gear (15) and/or the bevel gear (5) comprise molded-on and/or magnetically implemented markings that can be detected by the sensors (29, 29).

14. The drive system according to one or more of the preceding claims,
**characterized in that**,
the brake ring (10) is designed such that it is used as a heat sink for electronic components (27,28,29).

## Revendications

1. Système d'entraînement composé de pièces pouvant être combinées de manière modulaire, à partir desquels peut être créée une multitude d'entraînements et de prises de mouvement possédant des caractéristiques différentes, sachant que chaque combinaison des pièces comporte respectivement une embase de carter (1), au moins un moteur (3) et une démultiplication composée d'un pignon (4) et d'une roue conique (5), des parties supérieures de carter différentes (2, 2', 2", 2"') peuvent être prévues, qui peuvent être disposées au système d'entraînement pour réaliser des entraînements et des prises de force différentes, et sachant en outre que pour réaliser une transmission à dérivation de puissance, une barrette (11), une couronne intérieure (14), un satellite étagé (12) et une couronne extérieure (15) sont prévus, **caractérisé en ce que**
a) pour réaliser un entraînement au sol, la roue conique (5) présente un filetage (18') avec un pas non auto-bloquant et une fermeture géométrique par complémentarité de formes pour une prise de mouvement rotatoire (18),
b) pour réaliser un blocage de couple de charge au moyen d'un rapport linéaire entre le couple de freinage (Mb) et le coefficient de frottement (µ), un ressort de commande (7), un ressort de frein (8), une prise de mouvement (9) et une jante de freinage (10) sont prévus, sachant que le blocage de couple de charge présente un couple de freinage (Mb) à croissance ou à décroissance linéaire, dans lequel le rapport entre le couple de freinage (Mb) et le coefficient de frottement (µ) est linéaire et non exponentiel, si bien que des variations du coefficient de frottement (µ) n'ont qu'un effet linéaire, et non exponentiel, sur le couple de freinage (Mb),
c) sachant qu'un câble Bowden (17) est disposé à la couronne extérieure (15), via lequel un fermoir (25) peut être actionné.

2. Système d'entraînement selon la revendication 1,
**caractérisé en ce qu'**un
ressort de rappel (16) est disposé à la couronne extérieure (15), qui agit sur la couronne extérieure (15).

3. Système d'entraînement selon la revendication 1,
**caractérisé en ce que**
le ressort de commande (7) est façonné entant que poutre de flexion à la roue conique (5) et/ou en tant que poutre de flexion à la prise de mouvement (9).

4. Système d'entraînement selon la revendication 1,
**caractérisé en ce qu'**un
ressort spiral (6) peut être disposé dans la roue conique (5), dont les spires sont enroulées soit vers la droite, soit vers la gauche.

5. Système d'entraînement selon l'une quelconque ou plusieurs des revendications précédentes,
**caractérisé en ce qu'**une
broche réversible (20) est prévue, qui est entraînée par la roue conique (5) et dans laquelle le pas de filet est si grand qu'il n'apparait aucun auto-blocage.

6. Système d'entraînement selon l'une quelconque ou plusieurs des revendications précédentes,
**caractérisé en ce que**
des butées (22, 23) sont disposées de manière à ce qu'il se forme un intervalle de freinage (24) entre le ressort de frein (8) et la jante de frein (10) lors de l'entraînement d'une charge dans les deux sens.

7. Système d'entraînement selon l'une quelconque ou plusieurs des revendications précédentes,
**caractérisé en ce qu'**une
nervure d'arrêt (26) est disposée à la partie supérieure de carter (2'), qui bloque la couronne extérieure (15).

8. Système d'entraînement selon l'une quelconque ou plusieurs des revendications 3 à 7 précédentes,
**caractérisé en ce qu'**une
prise de mouvement doublement démultipliée (19) est créée par fermeture géométrique par complémentarité de formes dans la couronne intérieure (14).

9. Système d'entraînement selon l'une quelconque ou plusieurs des revendications 3 à 8 précédentes et une douille filetée avec pas réversible ou une douille filetée avec pas irréversible,
**caractérisé en ce que**
le système d'entraînement est combiné avec la douille filetée avec pas réversible (13) afin d'entraîner une broche (21) ou que le système d'entrainement est combiné avec la douille filetée avec pas irréversible (13') afin d'entraîner une broche (21').

10. Système d'entraînement selon la revendication 8 et selon la revendication 9, si dépendante de la revendication 8,
**caractérisé en ce que**
les démultiplications (il, i2, i3, i4) se présentent sous une forme telle qu'un couple de rotation/qu'une plage de vitesses de rotation maximal(e) soit couvert(e) avec les prises de mouvements rotatives (18, 19).

11. Système d'entraînement selon les revendications 9 ou 10, si dépendantes de la revendication 5, ou les revendications 9 ou 10, si dépendantes des revendications 6 à 8 dépendantes de la revendication 5,
**caractérisé en ce que**
les démultiplications (il, i2, i3, i4) et les pas des douilles filetées (13, 13') ainsi que le pas du filetage dans la roue conique (5) se présentent sous une forme telle qu'une plage maximale de forces/de vitesses soit couverte avec les prises de mouvement de translation (20, 21, 21').

12. Système d'entraînement selon l'une ou plusieurs des revendications précédentes et une électronique,
**caractérisé en ce que**
l'électronique (27) comporte un capteur (28) pour la détection du mouvement de la roue conique et/ou un capteur (29) pour la détection de la couronne extérieure (15).

13. Système d'entraînement selon la revendication 12,
**caractérisé en ce que**
la couronne extérieure (15) et/ou la roue conique (5) présente(nt) des marques façonnées et/ou magnétiques, qui peuvent être détectées par les capteurs (28, 29).

14. Système d'entraînement selon l'une quelconque ou plusieurs des revendications précédentes,
**caractérisé en ce que**
la jante de frein (10) se présente sous une forme de manière à être utilisée en tant que corps de refroidissement pour les composants électroniques (27, 28, 29).
